# EUROPÄISCHE PATENTSCHRIFT

(11) **EP 3 859 197 B1**
(45) Veröffentlichungstag und Bekanntmachung des Hinweises auf die Patenterteilung: **16.08.2023**
(21) Anmeldenummer: 20154567.0
(22) Anmeldetag: 30.01.2020
(51) Int. Cl.: F16L 11/12, F16L 53/38, F16L 59/02, H05B 3/58

(54) **HEIZSCHLAUCH ZUM FÖRDERN EINER FLÜSSIGKEIT, INSBESONDERE ZUM FÖRDERN EINES KLEBSTOFFS**
HEATING HOSE FOR CONVEYING A LIQUID, IN PARTICULAR FOR CONVEYING AN ADHESIVE
TUYAU CHAUFFANT DESTINÉ AU TRANSPORT D'UN LIQUIDE, EN PARTICULIER AU TRANSPORT D'UN ADHÉSIF

(43) Veröffentlichungstag der Anmeldung: 04.08.2021
(73) Patentinhaber: Robatech AG, 5630 Muri (CH)
(72) Erfinder: KNECHT, Stephan, 8966 Oberwil-Lieli (CH); SCHÄREN, Micha, 5630 Muri (CH); SENNRICH, Markus, 5022 Rombach (CH)
(74) Vertreter: Franke, Markus

(56) Entgegenhaltungen:
- EP-A1- 0 080 811
- EP-A1- 2 519 765
- WO-A1-03/098093
- US-A1- 2003 007 789

## Beschreibung

Die vorliegende Erfindung betrifft einen Heizschlauch zum Fördern von flüssigem Schmelzklebstoff oder anderen in heißem Zustand fließfähigen Stoffen von einem Schmelzgerät zu einem Auftragskopf. Der Heizschlauch dient insbesondere zur Anbindung an ein Schmelzgerät, wobei das Schmelzgerät dazu dient, den bei Zimmertemperatur festen Schmelzklebstoff aufzuschmelzen. Mit dem Heizschlauch wird der Schmelzklebstoff anschließend zur Auftragsstelle, typischerweise einem Auftragskopf, gefördert, wobei an der Auftragsstelle bzw. mittels des Auftragskopfs der Klebstoff auf ein Substrat aufgetragen wird. Der Heizschlauch dient insbesondere dazu, die in dem Heizschlauch zu fördernde Flüssigkeit in einem bestimmten Temperaturbereich zu halten und/oder die zu fördernde Flüssigkeit in dem Heizschlauch auf eine bestimmte Solltemperatur oder in einen bestimmten Solltemperaturbereich zu erwärmen.

Ein Heizschlauch, der die Merkmale des Oberbegriffs des Patentanspruchs 1 aufweist, ist aus der Druckschrift US 2003/0007789 A1 bekannt. Der aus der vorgenannten Druckschrift bekannte Heizschlauch weist auf:
- einen biegbaren Schlauch zum Durchleiten der Flüssigkeit,
- eine den biegbaren Schlauch umschließende Isolationsschicht,
- eine den biegbaren Schlauch umschließende Heizeinrichtung, wobei die Heizeinrichtung zwischen dem biegbaren Schlauch und der Isolationsschicht angeordnet ist. Die Isolationsschicht weist ein streifenförmiges Isolationsmaterial auf, wobei das streifenförmige Isolationsmaterial helixförmig um den biegbaren Schlauch gewickelt ist.

In der WO 03/098093 A1 wird ein thermisch isoliertes, steifes Rohr-in-Rohr System beschrieben, die als Isolationsmaterial ein Aerogel umfasst. Das dort beschriebene Rohrsystem findet Anwendung als Untersee-Pipeline. Derartige Rohrsysteme werden typischerweise im sogenannten Reeling-Verfahren verlegt, bei dem die zu verlegende Pipeline an Land verschweißt und auf einem Verlegeschiff auf einer Art Trommel (Reel) aufgewickelt wird. Beim Aufwickeln wird die Pipeline plastisch verformt und beim anschließenden Verlegen wieder gerade gezogen.

Die EP0 080 811 A1 und die EP 2 519 765 A1 zeigen weiteren Stand der Technik. Aufgabe der vorliegenden Erfindung ist es, einen Heizschlauch, der die Merkmale des Oberbegriffs des Patentanspruchs 1 aufweist, weiterzubilden, um bei einer möglichst geringen radialen Ausdehnung, somit Dicke, des Heizschlauchs einen besonders geringen Wärmeverlust des Heizschlauchs zu erreichen.

Diese Aufgabe wird durch einen Heizschlauch, der die Merkmale des Patentanspruchs 1 aufweist, gelöst.

Erfindungsgemäß ist vorgesehen, dass das streifenförmige Isolationsmaterial ein Aerogel aufweist.

Aerogele sind hochporöse Festkörper, die eine Vielzahl von Poren aufweisen. Aerogele zeichnen sich durch eine besonders geringe Wärmeleitfähigkeit aus.

Aufgrund der besonders geringen Wärmeleitfähigkeit des Aerogels weist das streifenförmige Isolationsmaterial ebenfalls eine besonders geringe Wärmeleitfähigkeit auf, sodass das streifenförmige Isolationsmaterial eine relativ geringe Dicke aufweisen kann und dennoch eine besonders gute Wärmeisolation des biegbaren Schlauchs erreicht werden kann.

Aerogele bzw. herkömmliche Aerogel beinhaltende Materialen haben die Eigenart, dass sie bei mechanischer Beanspruchung leicht beschädigt werden können und bei einer mechanischen Beanspruchung zu einer Staubentwicklung neigen. Diese Beschädigungen wirken sich zum einen nachteilig auf die Isolationswirkung aus. Zum anderen besteht die Gefahr, dass Abrieb und/oder Staub in die Umgebung geraten, wodurch es beispielsweise zu unerwünschten Verunreinigungen der zu verarbeitenden Flüssigkeit und/oder der Substrate kommen kann, auf die die Flüssigkeit aufgetragen werden soll. Ferner ist es vorteilhaft, eine Staubentwicklung bei der Herstellung des Heizschlauchs zu vermeiden, um ansonsten notwendige Schutzmaßnahmen, bspw. Absaugungen, Masken, etc., einzusparen.

Die Verwendung eines streifenförmigen Isolationsmaterials, das Aerogel beinhaltet, und helixförmig um den biegbaren Schlauch gewickelt ist, hat sich als vorteilhaft erwiesen, da bei einer mechanischen Beanspruchung des Heizschlauchs, beispielsweise in Form eines Biegens des Heizschlauchs, ein Verschieben der Wicklungen zueinander erfolgen kann, sodass die lokale Zug- und Druckbelastung des Isolationsmaterials der Isolationsschicht verringert wird. Dadurch wird eine Abrasion und/oder ein Stauben des in dem Isolationsmaterial beinhalteten Aerogels vermieden oder zumindest verringert.

Unter dem Begriff "helixförmig" wird vorliegend nicht notwendigerweise eine Wicklung mit einem konstanten Gangwinkel verstanden. Allerdings wird eine Wicklung mit einem konstanten Gangwinkel als besonders vorteilhaft angesehen.

Im Hinblick auf eine besonders gut und über die Länge des Schlauchs möglichst konstante Wärmeisolation hat es sich als vorteilhaft erwiesen, wenn das streifenförmige Isolationsmaterial selbstüberlappend um den biegbaren Schlauch gewickelt ist. Vorzugsweise beträgt die Überlappung bezogen auf eine Breite des streifenförmigen Isolationsmaterials 20 % bis 50 %, vorzugsweise 40% bis 50%, insbesondere 45 % bis 50 %. Als besonders vorteilhaft wird eine Überlappung von etwa 50 % angesehen. Bei einer Überlappung von ungefähr 50 % beträgt die Dicke der Isolationsschicht ungefähr das Zweifache der Dicke des streifenförmigen Isolationsmaterials. Bei einer Biegebewegung des Heizschlauchs wird aufgrund der Wicklung das Isolationsmaterial in geringerem Maße gedehnt und gestaucht, insbesondere im Vergleich zu Isolationsmaterialien in Rohrform, und zudem können die Wickellagen untereinander etwas gleiten, sodass auch bei einem gebogen verlegten Heizschlauch im Bereich der Biegung Lücken in der Isolationsschicht vermieden werden.

Hinsichtlich einer besonders hohen mechanischen Stabilität des Isolationsmaterials und einer besonders einfachen und schnellen Verarbeitung des Isolationsmaterials zwecks Bildung der Isolationsschicht hat es sich vorteilhaft erwiesen, wenn das streifenförmige Isolationsmaterial eine Breite von 15 mm bis 60 mm aufweist.

Das streifenförmige Isolationsmaterial weist vorzugsweise eine Dicke von 0,5 mm bis 6,0 mm, insbesondere eine Dicke von 2 mm bis 5 mm, vorzugsweise eine Dicke von 1 mm bis 3 mm auf.

Vorzugsweise beträgt ein Verhältnis der Dicke des Isolationsmaterials zur Breite des Isolationsmaterials zwischen 1/30 und 1/6.

Bei dem Aerogel handelt es sich insbesondere um ein Aerogel auf Basis von Silikat.

Bei dem Isolationsmaterial handelt es sich insbesondere um ein Vliess.

Um eine besonders gute mechanische Stabilität des Isolationsmaterials zu erreichen, wird es als vorteilhaft angesehen, wenn das Isolationsmaterial eine Stützstruktur aufweist. Bei dieser Stützstruktur handelt es sich insbesondere um eine faserbasierte Stützstruktur. Die Stützstruktur kann insbesondere Polyesterfasern und/oder Glasfasern beinhalten.

Um eine Beschädigung des Isolationsmaterials und/oder eine Staubfreisetzung bei der Verarbeitung bzw. bei einer mechanischen Belastung des Isolationsmaterials, beispielsweise bei einem Biegen des Heizschlauchs, zu vermeiden oder zumindest zu verringern, wird es als besonders vorteilhaft angesehen, wenn das Isolationsmaterial eine Beschichtung, insbesondere eine staubdichte oder staubzurückhaltende Beschichtung, aufweist. Um ein besonders gutes Gleiten der Wicklungen, beispielsweise bei einem Biegen des Heizschlauchs, zu erreichen, wird es als vorteilhaft angesehen, wenn es sich bei der Beschichtung um eine reibungsmindernde Beschichtung handelt.

Bei der Beschichtung handelt es sich insbesondere um eine Beschichtung auf Basis von Silikon und/oder Polyurethan. Insbesondere handelt es sich bei der Beschichtung um eine Silikonbeschichtung oder eine Polyurethanbeschichtung.

Ferner ist es durchaus denkbar, zusätzlich oder alternativ zu der Beschichtung, eine Ummantelung des streifenförmigen Isolationsmaterials vorzusehen. Bei der Ummantelung kann es sich beispielsweise um eine Ummantelung aus einer Kunststofffolie handeln. Auch papierartige Werkstoffe sind für die Ummantelung denkbar, insbesondere beschichtete papierartige Werkstoffe, beispielsweise in Art einer Backtrennfolie. Vorzugsweise umschließt die Ummantelung das Isolationsmaterial ohne an diesem zu haften.

In einer besonders vorteilhaften Ausführungsform ist vorgesehen, dass der Heizschlauch eine, vorzugsweise staubdichte, Abdeckschicht aufweist, wobei die Abdeckschicht die Isolationsschicht unmittelbar umschließt. Eine derartige Gestaltung ist insbesondere hinsichtlich der Vermeidung einer Staubentwicklung aufgrund von mechanischer Belastung des Isolationsmaterials beim Herstellen des Heizschlauchs als vorteilhaft anzusehen. Ferner wird die Abdeckschicht dahingehend als besonders vorteilhaft angesehen, dass weitere Lagen des Heizschlauchs, die die Isolationsschicht umgeben, die Isolationsschicht nicht unmittelbar kontaktieren, wodurch eine Beschädigung des Isolationsmaterials bzw. der Isolationsschicht vermieden wird.

Bei der Abdeckschicht handelt es sich insbesondere um ein streifenförmiges Abdeckmaterial, wobei das streifenförmige Abdeckmaterial helixförmig um die Isolationsschicht gewickelt ist, vorzugsweise selbstüberlappend um die Isolationsschicht gewickelt ist. Bei dem streifenförmigen Abdeckmaterial kann es sich insbesondere um ein Textilband oder ein Glasfaser-Gewebeband handeln. Bei dem streifenförmigen Abdeckmaterial kann es sich insbesondere um ein Abdeckmaterial mit einer Klebeschicht handeln. Vorzugsweise ist die Klebeschicht derart gestaltet, dass diese nicht an dem Isolationsmaterial haftet, sodass lediglich eine Selbsthaftung des Abdeckmaterials im Bereich der Selbstüberlappung auftritt.

In einer besonders bevorzugten Ausführungsform des Heizschlauchs weist der Heizschlauch eine Steuerleitung und/oder eine elektrische Versorgungsleitung auf, wobei die Steuerleitung und/oder die elektrische Versorgungsleitung mit einer dem Heizschlauch zusammenwirkenden Komponente einer Fördereinrichtung und/oder Auftragseinrichtung verbindbar ist. Das Integrieren der elektrischen Versorgungsleitung und/oder der Steuerleitung im Heizschlauch hat den Vorteil, dass die Leitungen zu der mit dem Heizschlauch zusammenwirkenden Komponenten nicht separat geführt werden müssen. Dadurch entsteht eine einfache und übersichtliche Installation mit geringer Fehleranfälligkeit. Bei manuellen Anwendungen wird die Personensicherheit erhöht, da die Anzahl der Verbindungsleitungen bei einer derartigen Ausführungsform besonders gering gehalten werden kann.

Im Zusammenhang mit einer integrierten Steuerleitung und/oder elektrischen Versorgungsleitung wird es als besonders vorteilhaft angesehen, wenn der Heizschlauch eine Verbindungsstruktur aufweist, wobei die Verbindungsstruktur mit der Steuerleitung und/oder der elektrischen Versorgungsleitung verbunden ist und die Verbindungsstruktur mit einer korrespondierenden Gegenstruktur der Komponente verbindbar ist. Dadurch ist die Handhabung, insbesondere die Installation des Heizschlauchs, besonders einfach möglich. Die Verbindungsstruktur ist insbesondere als Stecker und die Gegenstruktur als Buchse ausgebildet oder umgekehrt.

Hinsichtlich der Steuerleitung und/oder der elektrischen Versorgungsleitung wird es als besonders vorteilhaft angesehen, wenn diese helixförmig um die Isolationsschicht gewickelt sind, insbesondere die Steuerleitung und/oder die elektrische Versorgungsleitung helixförmig um die Abdeckschicht gewickelt ist.

In einer besonders bevorzugten Ausführungsform weist der Heizschlauch eine, vorzugsweise geschlossene, Außenhülle auf. Bei der Außenhülle handelt es sich insbesondere um eine Außenhülle aus Silikon, Polyurethan oder Polyethylen. Vorzugsweise ist die Außenhülle derart gestaltet, dass ein Eindringen von Wasser in den inneren Bereich des Heizschlauchs vermieden wird. Als besonders vorteilhaft hinsichtlich einer Reinigung der Außenhülle des Heizschlauchs wird es angesehen, wenn die Außenhülle glatt ausgebildet ist. Dadurch ist eine besonders einfache Reinigung bzw. ein Abwaschen der Außenhülle möglich. Ferner wird es als besonders vorteilhaft angesehen, wenn die Außenhülle aus einem elektrisch isolierend Material besteht bzw. elektrisch isolierend ist.

Vorzugsweise handelt es sich bei der Außenhülle um einen extrudierten Silikonschlauch oder einen geschäumten Silikonschlauch.

Vorzugsweise ist die Außenhülle auf die übrigen Bestandteile des Heizschlauchs aufgeschoben.

Um bei einem Aufschieben der Außenhülle und/oder einem Biegen des Heizschlauchs ein besonders gutes Gleiten der Außenhülle über die übrigen Bestandteile des Heizschlauchs zu verbessern, wird es als besonders vorteilhaft angesehen, wenn eine Innenseite der Außenhülle derart ausgebildet ist, dass diese einen besonders geringen Reibwert aufweist. Dies kann beispielsweise dadurch erreicht werden, dass die Innenseite der Außenhülle talkumiert ist.

Ferner wird es als besonders vorteilhaft angesehen, wenn ein Innendurchmesser der Außenhülle geringfügig größer ist als der Außendurchmesser einer der Außenhülle benachbarten Schicht des Heizschlauchs.

Als besonders vorteilhaft wird es angesehen, wenn eine Wickelrichtung des Abdeckmaterials und/oder eine Wickelrichtung der Steuerleitung und/oder eine Wickelrichtung der elektrischen Versorgungsleitung und/oder eine Wickelrichtung der Heizeinrichtung einer Wickelrichtung des Isolationsmaterials entspricht. Vorzugsweise weisen sämtliche helixförmig um den biegsamen Schlauch gewickelten Bestandteile des Heizschlauchs die gleiche Wickelrichtung auf. Eine derartige Gestaltung hat sich hinsichtlich einer guten Biegsamkeit des Heizschlauchs bei besonders geringer mechanischer Belastung der einzelnen Bestandteile als vorteilhaft erwiesen.

In einer vorteilhaften Weiterbildung des Heizschlauchs ist vorgesehen, dass ein Gangwinkel der Wicklungen des streifenförmigen Isolationsmaterials zwischen 5° und 30°, vorzugsweise zwischen 10° und 15° beträgt.

Bei dem biegsamen Schlauch handelt es sich insbesondere um einen Hochdruckschlauch.

Vorzugsweise weist der biegsame Schlauch eine Innenseele aus PTFE auf. Es ist aber auch durchaus denkbar, dass die Innenseele aus einem anderen Fluorkunststoff besteht.

Vorzugsweise weist der biegsame Schlauch eine außenliegende Armierung aus einem Metallgeflecht auf, insbesondere eine Armierung aus einem Stahllitzengeflecht auf. Hinsichtlich der Armierung ist es durchaus denkbar, dass anstelle von einem Stahllitzengeflecht bzw. einem Metalllitzengeflecht ein Geflecht von Aramidfasern verwendet wird.

In einer bevorzugten Ausführungsform ist eine Innenseele des biegsamen Schlauchs durch einen Metallwellschlauch gebildet. Der Metallwellschlauch kann parallel gewellt oder spiralgewellt sein. Ferner ist es durchaus denkbar, dass die Innenseele in Form eines Metallwellschlauchs wiederum von einer außenliegenden Armierung umgeben ist, insbesondere einer Armierung der vorgenannten Art.

Bei der Heizeinrichtung handelt es sich insbesondere um eine Widerstandsheizung mit zumindest einem Heizdraht.

Es ist durchaus denkbar, dass der Heizschlauch zusätzlich einen Temperatursensor umfasst, wobei der Temperatursensor vorzugsweise zwischen der Isolationsschicht und dem biegsamen Schlauch angeordnet ist.

Der Heizschlauch ist vorzugsweise dazu ausgelegt, die zu fördernde Flüssigkeit in einem Temperaturbereich von 80°C bis 230°C, insbesondere 120°C bis 200°C, zu halten bzw. zu erwärmen.

In den nachfolgenden Figuren ist die Erfindung anhand eines Ausführungsbeispiels näher erläutert, ohne hierauf beschränkt zu sein.

Es zeigen:
- Fig. 1: eine Ausführungsform eines Heizschlauchs in einer Schnittansicht,
- Fig. 2: der Heizschlauch gemäß Fig. 1 in einem Zwischenstadium bei der Herstellung des Heizschlauchs in einer perspektivischen Ansicht.

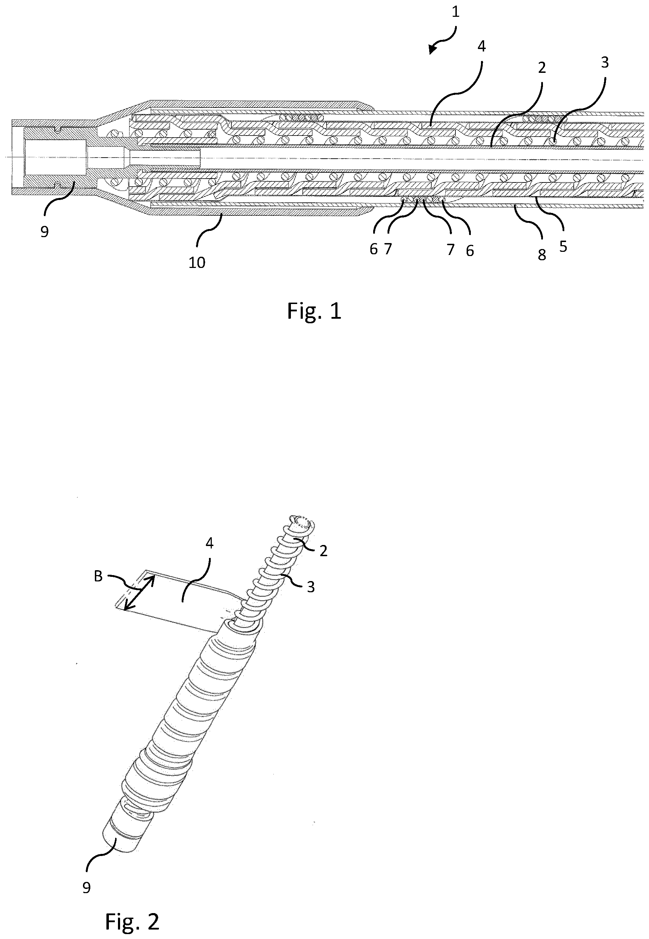

Die Fig. 1 und 2 zeigen einen Heizschlauch 1 zum Fördern einer Flüssigkeit, vorliegend zum Fördern eines Klebstoffs, wobei die Fig. 2 den Heizschlauch 1 in einem Zwischenstadium bei der Herstellung des Heizschlauchs 1 zeigt, somit die Fig. 2 den Heizschlauch 1 in einem unfertigen Zustand zeigt.

Der Heizschlauch 1 weist einen biegbaren Schlauch 2 zum Durchleiten der Flüssigkeit auf. Der biegbare Schlauch 2 ist von einer Heizeinrichtung 3 umschlossen, wobei die Heizeinrichtung 3 vorliegend zwei helixförmig um den biegsamen Schlauch 2 gewickelte Heizdrähte umfasst, wobei ein Ende des einen Heizdrahts mit einem Ende des anderen Heizdrahts verbunden ist. Bei einer derartigen Gestaltung der Heizeinrichtung 3 mit endseitig miteinander verbundenen Heizdrähten ist es möglich, die Energieversorgung der Heizeinrichtung 3 an nur einem Ende des Heizschlauchs 1 anzuschließen. Als besonders vorteilhaft wird es angesehen, wenn der jeweilige Heizdraht mit einer elektrischen Isolation umschlossen ist. Bei der elektrischen Isolation kann es sich beispielsweise um eine PTFE-Beschichtung oder Silikonbeschichtung oder eine Hülle aus PTFE oder eine Hülle aus Silikon handeln. Der Werkstoff PTFE wird allerdings bevorzugt.

Der Heizschlauch 1 weist ferner eine den biegbaren Schlauch 2 und die Heizeinrichtung 3 umschließende Isolationsschicht auf, wobei die Isolationsschicht durch ein streifenförmiges Isolationsmaterial 4 gebildet ist, wobei das streifenförmige Isolationsmaterial 4 helixförmig und selbstüberlappend um den biegbaren Schlauch 2 und die Heizeinrichtung 3 gewickelt ist, wobei die Überlappung bezogen auf eine Breite B des streifenförmigen Isolationsmaterials 4 ungefähr 50% beträgt. Das streifenförmige Isolationsmaterial 4 weist ein Aerogel auf.

Der Heizschlauch 1 weist ferner eine staubdichte oder zumindest die Staubfreisetzung mindernde Abdeckschicht 5 auf, wobei die Abdeckschicht 5 die Isolationsschicht unmittelbar umschließt. Der Heizschlauch 1 umfasst ferner mehrere Steuerleitungen 6 und mehrere elektrische Versorgungsleitungen 7, wobei die mehreren Steuerleitungen 6 und die mehreren elektrischen Versorgungsleitungen 7 helixförmig um die Abdeckschicht 5 gewickelt sind.

Der Heizschlauch 1 weist eine Außenhülle 8 auf, wobei die Außenhülle 8 die Steuerleitung 6 und die elektrischen Versorgungsleitungen 7 umschließt und die innenliegende Bestandteile des Heizschlauchs 1 gegenüber der Umgebung abdichtet.

Endseitig weist der Heizschlauch 1 eine Anschlussstruktur 9 auf, um eine Fluidverbindung zwischen dem Heizschlauch 1 und weiteren Komponenten einer Auftragseinrichtung und/oder Fördereinrichtung und/oder Schmelzeinrichtung herzustellen. Um ein Eindringen von Staub und/oder Flüssigkeiten in das Innere des Heizschlauchs 1 im Bereich der Anschlussstruktur 9 zu verhindern, weist der Heizschlauch 1 endseitig, somit im Bereich der Anschlussstruktur 9, eine die Anschlussstruktur 9 und umschließende Endkappe 10 auf, wobei die Endkappe 10 auch einen endseitigen Teilbereich der Außenhülle 8 umschließt.

Es ist durchaus denkbar, dass der Heizschlauch 1 zusätzlich einen Temperatursensor umfasst, wobei der Temperatursensor vorzugsweise zwischen der Isolationsschicht und dem biegsamen Schlauch 2 angeordnet ist.

Wie insbesondere der Fig. 1 zu entnehmen ist, weisen sämtliche helixförmig um den biegsamen Schlauch 2 gewickelte Bestandteile des Heizschlauchs 1 die gleiche Wickelrichtung auf.

### Bezugszeichenliste

- 1: Heizschlauch
- 2: biegsamer Schlauch
- 3: Heizeinrichtung
- 4: Isolationsmaterial
- 5: Abdeckschicht
- 6: Steuerleitung
- 7: Versorgungsleitung
- 8: Außenhülle
- 9: Anschlussstruktur
- 10: Endkappe

- B: Breite

## Patentansprüche

1. Heizschlauch (1) zum Fördern von flüssigem Schmelzklebstoff oder anderen in heißem Zustand fließfähigen Stoffen von einem Schmelzgerät zu einem Auftragskopf, aufweisend:
- einen biegbaren Schlauch (2) zum Durchleiten der Flüssigkeit,
- eine den biegbaren Schlauch (2) umschließende Isolationsschicht,
- eine den biegbaren Schlauch (2) umschließende Heizeinrichtung (3), wobei die Heizeinrichtung (3) zwischen dem biegbaren Schlauch (2) und der Isolationsschicht angeordnet ist,
wobei die Isolationsschicht ein streifenförmiges Isolationsmaterial (4) umfasst, wobei das streifenförmige Isolationsmaterial (4) helixförmig um den biegbaren Schlauch (2) gewickelt ist, **dadurch gekennzeichnet, dass** das streifenförmige Isolationsmaterial (4) ein Aerogel aufweist.

2. Heizschlauch nach Anspruch 1, wobei das streifenförmige Isolationsmaterial (4) eine Breite (B) von 15 mm bis 60 mm aufweist und/oder das streifenförmige Isolationsmaterial (4) eine Dicke von 1 mm bis 3 mm aufweist.

3. Heizschlauch nach Anspruch 1 oder 2, wobei das streifenförmige Isolationsmaterial (4) selbstüberlappend um den biegbaren Schlauch (2) gewickelt ist, vorzugsweise die Überlappung bezogen auf die Breite des streifenförmigen Isolationsmaterials (4) 20% bis 50%, vorzugsweise 40% bis 50%, insbesondere 45% bis 50% beträgt.

4. Heizschlauch nach einem der Ansprüche 1 bis 3, wobei es sich bei dem Aerogel um ein Aerogel auf Basis von Silicat handelt.

5. Heizschlauch nach einem der Ansprüche 1 bis 4, wobei das Isolationsmaterial (4) eine Stützstruktur aufweist, insbesondere ein faserbasierte Stützstruktur aufweist.

6. Heizschlauch nach einem der Ansprüche 1 bis 5, wobei das streifenförmige Isolationsmaterial (4) eine Beschichtung aufweist, vorzugsweise eine reibungsmindernde Beschichtung und/oder staubzurückhaltende Beschichtung aufweist.

7. Heizschlauch nach Anspruch 6, wobei die Beschichtung eine Beschichtung auf Basis von Silikon und/oder Polyurethan ist, vorzugsweise die Beschichtung eine Silikonbeschichtung oder Polyurethanbeschichtung ist.

8. Heizschlauch nach einem der Ansprüche 1 bis 7, wobei das streifenförmige Isolationsmaterial (4) eine Ummantelung aufweist.

9. Heizschlauch nach einem der Ansprüche 1 bis 8, wobei der Heizschlauch (1) eine Abdeckschicht (5) aufweist, wobei die Abdeckschicht (5) die Isolationsschicht unmittelbar umschließt.

10. Heizschlauch nach Anspruch 9, wobei die Abdeckschicht (5) ein streifenförmiges Abdeckmaterial umfasst, wobei das streifenförmige Abdeckmaterial helixförmig um die Isolationsschicht gewickelt ist, vorzugweise selbstüberlappend um die Isolationsschicht gewickelt ist.

11. Heizschlauch nach einem der Ansprüche 1 bis 10, wobei der Heizschlauch (1) eine Steuerleitung (6) und/oder eine elektrische Versorgungsleitung (7) umfasst, wobei die Steuerleitung (6) und/oder elektrische Versorgungsleitung (7) mit einer mit dem Heizschlauch (1) zusammenwirkenden Komponente einer Fördereinrichtung und/oder Auftragseinrichtung verbindbar ist, vorzugsweise der Heizschlauch (1) eine Verbindungsstruktur aufweist, wobei die Verbindungsstruktur mit der Steuerleitung und/oder der elektrische Versorgungsleitung verbunden ist, wobei die Verbindungsstruktur mit einer korrespondierenden Gegenstruktur der Komponente verbindbar ist.

12. Heizschlauch nach Anspruch 11, wobei die Steuerleitung (6) und/oder elektrische Versorgungsleitung (7) helixförmig um die Isolationsschicht gewickelt ist, insbesondere die Steuerleitung (6) und/oder elektrische Versorgungsleitung (7) helixförmig um die Abdeckschicht (5) gewickelt ist.

13. Heizschlauch nach einem der Ansprüche 1 bis 12, wobei der Heizschlauch (1) eine Außenhülle (8) aufweist, vorzugsweise die Außenhülle (8) Silikon und/oder Polyurethan und/oder Polyethylen aufweist oder aus Silikon, Polyurethan oder Polyethylen besteht.

14. Heizschlauch nach einem der Ansprüche 10 bis 13, wobei eine Wickelrichtung des Abdeckmaterials (5) und/oder eine Wickelrichtung der Steuerleitung (6) und/oder eine Wickelrichtung der elektrische Versorgungsleitung (7) und/oder eine Wickelrichtung der Heizeinrichtung (3) einer Wickelrichtung des Isolationsmaterials (4) entspricht, vorzugsweise sämtliche helixförmig um den biegsamen Schlauch (2) gewickelten Bestandteile des Heizschlauchs (1) die gleiche Wickelrichtung aufweisen.

15. Heizschlauch nach einem der Ansprüche 1 bis 14, wobei ein Gangwinkel der Wicklung des streifenförmigen Isolationsmaterials (4) zwischen 5° und 30°, insbesondere zwischen 10° und 15°, vorzugsweise 15° beträgt.

## Claims

1. Heated hose (1) for delivering a liquid hotmelt adhesive or other substances which are fluid in the hot state from a melting unit to a discharge head, comprising:
- a flexible hose (2) for the passage of the liquid,
- an insulating layer surrounding the flexible hose (2),
- a heating device (3) surrounding the flexible hose (2), wherein the heating device (3) is disposed between the flexible hose (2) and the insulating layer,
wherein the insulating layer comprises a strip-shaped insulating material (4), wherein the strip-shaped insulating material (4) is wound helically around the flexible hose (2), **characterized in that** the strip-shaped insulating material (4) comprises an aerogel.

2. Heated hose according to Claim 1, wherein the strip-shaped insulating material (4) has a width (B) of 15 mm to 60 mm and/or the strip-shaped insulating material (4) has a thickness of 1 mm to 3 mm.

3. Heated hose according to Claim 1 or 2, wherein the strip-shaped insulating material (4) is wound in a self-overlapping manner around the flexible hose (2), the overlap preferably being 20% to 50%, preferably 40% to 50%, in particular 45% to 50%, in relation to the width of the strip-shaped insulating material (4).

4. Heated hose according to one of Claims 1 to 3, wherein the aerogel is a silicate-based aerogel.

5. Heated hose according to one of Claims 1 to 4, wherein the insulating material (4) has a supporting structure, in particular a fibre-based supporting structure.

6. Heated hose according to one of Claims 1 to 5, wherein the strip-shaped insulating material (4) has a coating, preferably a friction-reducing coating and/or a dust-retaining coating.

7. Heated hose according to Claim 6, wherein the coating is a silicone-based and/or polyurethane-based coating, and the coating is preferably a silicone coating or a polyurethane coating.

8. Heated hose according to one of Claims 1 to 7, wherein the strip-shaped insulating material (4) comprises a sheath.

9. Heated hose according to one of Claims 1 to 8, wherein the heated hose (1) has a covering layer (5), wherein the covering layer (5) directly surrounds the insulating layer.

10. Heated hose according to Claim 9, wherein the covering layer (5) comprises a strip-shaped covering material, wherein the strip-shaped covering material is wound helically around the insulating layer, preferably is wound around the insulating layer in a self-overlapping manner.

11. Heated hose according to one of Claims 1 to 10, wherein the heated hose (1) comprises a control line (6) and/or an electrical supply line (7), wherein the control line (6) and/or the electrical supply line (7) can be connected to a delivery device component and/or application device component that interact(s) with the heated hose (1), and the heated hose (1) preferably has a connecting structure, wherein the connecting structure is connected to the control line and/or to the electrical supply line, wherein the connecting structure can be connected to a corresponding mating structure of the component.

12. Heated hose according to Claim 11, wherein the control line (6) and/or the electrical supply line (7) are/is wound helically around the insulating layer, in particular the control line (6) and/or the electrical supply line (7) are wound helically around the covering layer (5).

13. Heated hose according to one of Claims 1 to 12, wherein the heated hose (1) comprises an outer casing (8), and the outer casing (8) preferably comprises silicone and/or polyurethane and/or polyethylene or consists of silicone, polyurethane or polyethylene.

14. Heated hose according to one of Claims 10 to 13, wherein a winding direction of the covering material (5) and/or a winding direction of the control line (6) and/or a winding direction of the electrical supply line (7) and/or a winding direction of the heating device (3) correspond(s) to a winding direction of the insulating material (4), and preferably all of the constituent parts of the heated hose (1) which are wound helically around the flexible hose (2) have the same winding direction.

15. Heated hose according to one of Claims 1 to 14, wherein a lead angle of the winding of the strip-shaped insulating material (4) is between 5° and 30°, in particular between 10° and 15°, preferably 15°.

## Revendications

1. Tuyau chauffant (1) pour transporter un adhésif liquide sensible à la pression ou d'autres substances fluides à chaud d'un appareil de fusion à une tête d'application, comprenant :
- un tuyau flexible (2) pour faire passer le liquide,
- une couche d'isolation entourant le tuyau flexible (2),
- un dispositif de chauffage (3) entourant le tuyau flexible (2), le dispositif de chauffage (3) étant disposé entre le tuyau flexible (2) et la couche d'isolation,
la couche d'isolation comprenant un matériau isolant (4) en forme de bande,
le matériau isolant (4) en forme de bande étant enroulé en hélice autour du tuyau flexible (2), **caractérisé en ce que** le matériau isolant (4) en forme de bande comprend un aérogel.

2. Tuyau chauffant selon la revendication 1, dans lequel le matériau isolant (4) en forme de bande présente une largeur (B) de 15 mm à 60 mm et/ou que le matériau isolant (4) en forme de bande présente une épaisseur de 1 mm à 3 mm.

3. Tuyau chauffant selon la revendication 1 ou 2, dans lequel le matériau isolant (4) en forme de bande est enroulé en auto-chevauchement autour du tuyau flexible (2), de préférence le chevauchement étant, par rapport à la largeur du matériau isolant (4) en forme de bande, de 20 % à 50 %, de préférence de 40 % à 50 %, en particulier de 45 % à 50 %.

4. Tuyau chauffant selon l'une des revendications 1 à 3, dans lequel l'aérogel est un aérogel à base de silicate.

5. Tuyau chauffant selon l'une des revendications 1 à 4, le matériau isolant (4) présentant une structure support, en particulier une structure support à base de fibres.

6. Tuyau chauffant selon l'une des revendications 1 à 5, dans lequel le matériau isolant (4) en forme de bande comprend un revêtement, de préférence un revêtement diminuant le frottement et/ou un revêtement retenant les poussières.

7. Tuyau chauffant selon la revendication 6, dans lequel le revêtement est un revêtement à base de silicone et/ou de polyuréthane, le revêtement étant de préférence un revêtement de silicone ou un revêtement de polyuréthane.

8. Tuyau chauffant selon l'une des revendications 1 à 7, dans lequel le matériau isolant (4) en forme de bande présente un gainage.

9. Tuyau chauffant selon l'une des revendications 1 à 8, le tuyau chauffant (1) comportant une couche de couverture (5), la couche de couverture (5) entourant directement la couche d'isolation.

10. Tuyau chauffant selon la revendication 9, dans lequel la couche de couverture (5) comprend un matériau de couverture en forme de bande, le matériau de couverture en forme de bande étant enroulé en hélice autour de la couche d'isolation, étant de préférence enroulé en auto-chevauchement autour de la couche d'isolation.

11. Tuyau chauffant selon l'une des revendications 1 à 10, le tuyau chauffant (1) comprenant une conduite de guidage (6) et une conduite d'alimentation électrique (7), la conduite de guidage (6) et/ou la conduite d'alimentation électrique (7) pouvant être reliées à un composant, coopérant avec le tuyau chauffant (1), d'un dispositif de chauffage et/ou d'un dispositif d'application, de préférence le tuyau chauffant (1) présentant une structure de liaison, la structure de liaison étant reliée à la conduite de guidage et/ou à la conduite d'alimentation électrique, la structure de liaison pouvant être liée à une contre-structure correspondante du composant.

12. Tuyau chauffant selon la revendication 11, dans lequel la conduite de guidage (6) et/ou la conduite d'alimentation électrique (7) sont enroulées en hélice autour de la couche d'isolation, en particulier la conduite de guidage (6) et/ou la conduite d'alimentation électrique (7) sont enroulées en hélice autour de la couche de couverture (5).

13. Tuyau chauffant selon l'une des revendications 1 à 12, le tuyau chauffant (1) présentant une enveloppe extérieure (8), de préférence l'enveloppe extérieure (8) comprenant de la silicone et/ou du polyuréthane et/ou du polyéthylène ou étant constituée de silicone, de polyuréthane ou de polyéthylène.

14. Tuyau chauffant selon l'une des revendications 10 à 13, dans lequel un sens d'enroulement du matériau de couverture (5) et/ou un sens d'enroulement de la conduite de guidage (6) et/ou un sens d'enroulement de la conduite d'alimentation électrique (7) et/ou un sens d'enroulement du dispositif de chauffage (3) correspondent à un sens d'enroulement du matériau isolant (4), de préférence la totalité des constituants, enroulés en hélice autour du tuyau flexible (2), du tuyau chauffant (1) présentant le même sens d'enroulement.

15. Tuyau chauffant selon l'une des revendications 1 à 14, un angle de pas de l'enroulement du matériau d'isolation (4) en forme de bande étant de 5° à 30°, en particulier de 10° à 15°, de préférence de 15°.
